# EUROPEAN PATENT SPECIFICATION

(11) **EP 4 313 703 B1**
(45) Date of publication and mention of the grant of the patent: **04.06.2025**
(21) Application number: 22715630.4
(22) Date of filing: 29.03.2022
(51) Int. Cl.: B60T 1/06, B60K 7/00, B60K 17/04

(54) **INVERTED PORTAL AXLE FOR USE IN A LOW FLOOR BUS**
UMGEKEHRTE PORTALACHSE ZUR VERWENDUNG IN EINEM NIEDERFLURBUS
ESSIEU DE PORTAIL INVERSÉ À UTILISER DANS UN BUS À PLANCHER BAS

(30) Priority: 30.03.2021 EP 21165972
(43) Date of publication of application: 07.02.2024
(73) Proprietor: Traction Innovation B.V., 1015 GS Amsterdam (NL)
(72) Inventor: Van Lookeren Campagne, Pieter Theodoor, 1025 LJ Amsterdam (NL)
(74) Representative: Cramwinckel, Michiel
(86) International application number: PCT/EP2022/058225
(87) International publication number: WO 2022/207617

(56) References cited:
- WO-A1-2019/218630
- DE-B- 1 227 783
- DE-C1- 4 303 069
- US-A1- 2008 066 980
- US-A1- 2019 023 118

## Description

The invention is directed to an inverted portal axle for use in a low floor bus comprising two hub carriers each having a bearing centre axis, which bearing centre axes are positioned on a common axis and wherein the two hub carriers are connected by an axle bridge structure that is radially spaced apart from the common axis thereby creating a space for a low floor when the axle is used in a low floor bus. Each hub carrier comprises a stator of an electric motor and carries a rotary assembly comprising a flange to support a rim for a tyre. The hub carrier comprises of a first part which is laterally positioned within the rim and tyre combination when mounted and a second part. The second part of one hub carrier is connected to the second part of the other hub carrier by the axle bridge structure. The rotary assembly is comprised of a wheel hub shaft and a second part. The second part of the hub carrier comprises the stator of the electric motor and the second part of the rotary assembly comprises a rotor of the electric motor.

An inverted portal axle for use in a low floor bus is known for conventional diesel-powered busses as described in US6035956.

More recently electric powered busses having a low floor are developed and an example of an inverted portal axle for an electric powered low floor bus is described in WO2019/218630. This publication describes two hub carriers connected by an axle casing. The axle casing is radially spaced apart from the axis of rotation of the two-hub carriers resulting in an aisle space within the low floor bus. To each of the hub carriers a double tyre configuration is mounted. Within the inner tyre of the double tyre configuration an electric motor is present. A planetary gear reducer is present to ensure a high transmission ratio. A brake system is positioned axially next to the double wheel configuration thereby leaving enough space between the two-hub carriers to create a low floor aisle in the bus. A disadvantage of the inverted portal axle for a low floor bus that is described in WO2019/218630 is that a planetary gear is required which makes the construction complex, increases sound level and maintenance, and reduces efficiency and longevity.

US2019/0023118 describes a vehicle wheel with a rim sized for two tyres and with an in-wheel electric direct drive so-called "outer runner" motor. The inside stator of the electric motor is part of the non-rotating wheel part and the outside rotor of the electric motor is part of the rotating part supporting the rim. A disadvantage of this vehicle wheel is that the torque which can be obtained is limited and may limit prolonged uphill driving. A further disadvantage is that no standard rims can be used.

The object of the present invention is to provide an inverted portal axle for a low floor bus which does not have the problems of the prior art solutions as here described.

This object is achieved by the following inverted portal axle for use in a low floor bus comprising two hub carriers having a bearing centre axis, which bearing centre axes are positioned on a common axis and wherein the two hub carriers are connected by an axle bridge structure that is radially spaced apart from the common axis thereby creating a space for a low floor when the axle is used in a low floor bus,
wherein each hub carrier comprises a stator of an electric motor and carries a rotary assembly comprising a flange to support a rim for a tyre,
wherein the hub carrier comprises of a first part which is laterally positioned within the rim and tyre combination when mounted and a second part;
wherein the second part of one hub carrier is connected to the second part of the other hub carrier by the axle bridge structure;
wherein the rotary assembly is comprised of a wheel hub shaft and a second part;
wherein the second part of the hub carrier comprises the stator of the electric motor and the second part of the rotary assembly comprises a rotor of the electric motor,
wherein the electric motor is a direct drive electric motor, the tyre is a single tyre, the second part of the hub carrier is laterally positioned next to the rim and tyre combination when mounted and the second part of the rotary assembly is laterally positioned next to the rim and tyre combination when mounted.

Applicants found that by replacing the two tyre rims by a single rim for a single tyre a space becomes available for a direct drive electric motor laterally positioned next to the rim and tyre combination while remaining enough space for the low floor aisle. One single tyre can replace a double tyre combination in an inverted portal axle for use in a low floor bus without negatively affecting the driving achievements of the bus. Further standard rims may be used.

In this description of the invention terms like upper, lower, above, below, behind and front are used to describe the inverted portal axle in the orientation in which it will be used in a bus having a driving direction. Behind and front relate to the driving direction. The use of these terms are not meant to limit the invention in any manner. Thus carrier hubs and inverted portal axles stored or transported in a different orientation are also meant by this description and claims.

The dimensions and in particular the diameter of the direct drive electric motor in this design is not limited by the dimensions of the rim as in the prior art designs. This allows that the outside diameter of the direct drive motor can be greater than the rim diameter. Because the torque of a well-designed electric torque motor is proportional with the stack length and proportional with the square of the airgap diameter it follows that less copper and permanent magnet material, such as neodymium, may be required to achieve a comparable torque as in the design of US2019/0023118. Further the torque can be higher than a design according US2019/0023118 and suffice for prolonged uphill driving. A next advantage is that the stator cooling surface can be significantly larger than in the design of US2019/0023118. This because the diameter of the cooling surface is larger than the air gap diameter in this design as will be described below. This results in a more efficient cooling of the stator.

The electric motor may be any electric motor comprising of a stator and a rotor. The electric motor may be a high rotor pole switched reluctance machine and wherein the rotor comprises a plurality of rotor poles. An example of such an electric motor is described in US10707798. The electric motor may also be the well known direct drive permanent magnet torque motor. The stator of such different motor types may be as described below. The rotor will be different in that the rotor of the drive electric torque motor will comprise permanent magnets. The rotor may also be an internal permanent magnet (IPM) rotor, or the rotor may be the rotor of an asynchronous induction motor.

Direct drive electric motor means that no gears, such as planetary gears and spur gears are present between the electric torque motor and the wheel hub shaft.

Each hub carrier carries a wheel hub shaft that comprises a flange to support a rim for a single tyre. The dimensions of the hub carrier suitably does not allow support of a double tyre rim configuration as for example described in US2019/0023118. The tyre dimensions and/or properties are suitably such that a single tyre can replace two conventional tyres. An example of such a tyre is a so-called super single tyre. A super single tyre is a well known type of tyre which may be used to replace two tyres, typically to replace dual truck or bus tyres. Super single tyres may be obtained from tyre manufactures such as Michelin as the Michelin X One XDU 455/45R22,5 tyre. The width of a super single tyre will be less than the combined width of the two tyres it aims to replace.

The above mentioned super single tyre has an actual loaded width of approximately 485 mm, whereas the total loaded width of two tyres 275/70R22,5 with a spacing of 319 mm is approximately 620 mm. Thus by using a super single tyre about 135 mm of space is gained. The invention is thus especially directed to a hub carrier which allows to support a rim for a single tyre which has a nominal width of less than 500 mm. More preferably to a hub carrier which allows to support a rim for a single tyre which has a nominal width of between 350 and 500 mm and even more preferably between 400 and 500 mm.

The single tyre, when mounted on the rim, may comprise pressure monitoring.

The second part of the hub carrier comprises of a stator of the electric torque motor and the second part of the rotary assembly comprises a rotor of the electric torque motor. In use the hub carrier will suitably be part of a rear axle that is connected to a vehicle, suitably a bus. When electric currents run through the stator windings, torque is transmitted to the rotor and the wheel hub driveshaft. Torque will result in a rotation of the wheel hub drive shaft relative to the hub carrier and as a result move the vehicle.

The stator may be suitably enclosed in a load bearing housing as part of the second part of the hub carrier. This housing may be tubular or substantially tubular having for example a flattened lower end facing the road. The stator is suitably positioned at the inner side of the load bearing housing. The stator may be encapsulated by a resin before or after it is positioned at the inner side of the load bearing housing.

The stator may comprise of a lamination stack having a substantially tubular shape as positioned at the inner side of the load bearing housing. Preferably the radial outer surface of lamination stack rests against the inner surface of the load bearing housing. In this way the distance between the outer surface of the lamination stack and the bearing centre axes is a large as possible. This distance may also be expressed as the outer diameter of the tubular lamination stack. The outer diameter of the tubular lamination stack is not limited by the dimensions of the rim as in some prior art designs. This because the second part of the hub carrier is positioned next to the area where this rim is present. Preferably this outer diameter of the tubular lamination stack of the stator is therefore more than 90% of the largest diameter of the rim and more preferably at least about equal to the largest diameter of the rim or above. The maximum outer diameter of the tubular lamination stack of the stator will be determined by the maximum allowable outer diameter of the load bearing housing. The radial outer end at the lowest point of the circumference of the load bearing housing and thus also the lowest point of the hub carrier is limited by the minimum allowable distance to a road surface. When the stator and its lamination stack have a diameter as described above an inner space is provided for a brake assembly.

The length of the stator lamination stack and winding heads is limited by on one side the tyre-rim combination, whereby the tyre is at its widest dimension due to static and dynamic loads, and on the other side by the vertical wall that encloses the aisle whereby a free space is required to accommodate movements of the axle with respect to the vehicle structure.

Cooling channels may be suitably present between the outer housing and the stator. For example the lamination stack may be mounted into a sleeve that includes cooling channels or cooling channels may be provided on the inner surface of the load bearing housing. In use a liquid cooling medium flows through these cooling channels to cool the stator. The resulting cooling area will be relatively large and significantly larger than for example the cooling area of US2019/0023118. Especially when the maximum largest diameter of the tubular lamination stack is within the preferred ranges. This larger cooling area is advantageous because of the resulting efficient cooling and resulting higher efficiency.

The stator and rotor may have a configuration known to the skilled person. The stator may be a concentrated winding, distributed winding or a hairpin winding. The stator may be connected to a drive unit that is connected to a battery or a fuel cell or other means to generate electricity via one or more power wires. Preferably the wire connections of the wires between motor and drive unit and the coil interconnections are located in the lower 180 and more preferably lower 120 degrees of the motor circumference. In this way the wires do not interfere with the free space for the low floor aisle.

The second part of the rotary assembly comprises a rotor of the electric motor. The rotor is aligned with the stator such that between them a small tubular shaped air gap is present. When the electric motor is a permanent magnet torque motor the rotor will comprise permanent magnets. This rotor may be a steel tube provided with a space for carrying permanent magnets, also referred to as the steel rotor tube. The permanent magnets are positioned at the external surface of the steel rotor tube such as to face the stator. A sleeve, for example a stainless steel or carbon fibre sleeve, may be present around the magnets to further fix the magnets within the steel rotor tube. The rotor may have a large number of magnetic poles, for example about a hundred poles.

The electric motor is advantageously adapted for regenerative braking. Regenerative braking recovers most of the kinetic energy that would otherwise turn into heat and instead converts it into electric energy. In this system, the motor drives the wheels during acceleration or cruising, but the wheels drive the motor while decelerating. This two-way energy flow allows the motor to act as a generator, resisting the rotation of the wheels and creating electric energy to recharge the vehicle's battery. In addition to regenerative braking, friction brakes are preferably present for emergency braking and/or for a parking brake. Preferably bleed resistors are present to dissipate electric energy in situations where the battery is fully charged. This allows one to decelerate using the electric motor while the battery is fully charged. This is especially relevant during prolonged downhill driving with a fully charged battery. In such a situation the friction brakes may perform in time less optimal because of overheating. By being able to dissipate the electric energy to the bleed resistors braking may then still be possible using the electric motor. The invention is thus also directed to a vehicle having an axle according to this invention, comprising preferably a drum brake, and wherein the electric motor is adapted for regenerative braking and the vehicle is further provided with one or more bleed resistors.

The rotor and especially the steel rotor tube has an internal diameter which provides an internal space where a brake can be mounted, that is connected to the rotary assembly. The brake is preferably a pneumatic actuated brake. The brake may include an emergency brake and a parking brake function. The brake may be a drum brake or a disc brake.

When a disc brake is used it is preferred to position the brake disc within the internal space of the steel rotor tube. Preferably a brake disc having a diameter of 374 mm should be able to be mounted on the rotary assembly and more preferably a brake disc having a diameter of 430 mm should be able to be mounted on the rotary assembly.

The brake disc may be suitably provided with a brake calliper that shall also fit within the inner diameter of the rotor steel tube. The brake calliper is operated by a brake actuator. The brake calliper is suitably mounted at or close to the lowest point of the circumference of the hub carrier. This is advantageous because the brake actuator may then be located below the aisle of the low floor bus. The brake calliper will be mounted to a brake carrier that is connected to the hub carrier.

When manufacturing the inverted portal axle according to this invention, and using a disc brake, it is preferred that the brake disc, calliper and brake carrier are preassembled on a temporary jig and mounted in a single operation to the rotary assembly and hub carrier second part after which the mounting jig is removed.

Preferably a drum brake is used as an additional brake to the regenerative braking. When a drum brake is used it is preferred that the drum brake is present in the internal space of the rotor. Such a drum brake does not require a brake calliper as described above and for that reason will require less space to be mounted. It has been found that the invented design allows a drum brake with an internal drum diameter of 420 mm to be fitted in this internal space of the rotor. A known disadvantage of the drum brake over the disc brake is that the performance of a drum brake during prolonged braking is not as good as the performance of a disc brake because of the thermal load of the drum brake. For the present application this does not necessarily has to be a disadvantage when the majority of the braking activity is performed by a regenerative braking system. The drum brakes will then in practice only be incidentally used for emergency braking or as a parking brake Because of this lesser use the thermal load will be negligible. This allows one to use the mechanically simpler drum brake instead of a disc brake. The typical disadvantages of the drum brake versus the disc brake such as ease of inspection do not apply for this design. It is even found that the drum brakes are more easy to inspect than the disc brake in this design. Further it is found that a drum brake is easier to fit as compared to a disc brake because for example a temporary jig as mounting tool is not required. A drum brake can be dimensioned such that sufficient space can become available for an internal permanent magnet rotor or the rotor of an asynchronous induction motor, that both have a smaller internal diameter than a permanent magnet rotor with surface mounted magnets.

Additionally a seal carrier may be present which separates an outside environment from a sealed space in which the steel rotor tube rotates. The seal carrier may be provided with a central opening for passage of the second part of the wheel hub shaft. At this opening a seal may be present to avoid that dirt, metal scrap and the like enters this space. The seal may be a double seal with a grease filling in between.

The brake may be installed in the outside environment as is usually done. Also an enclosed rotary sensor which is part of an electric motor can be suitably located in the outside environment. More preferably the rotary sensor is mounted on the brake carrier. This sensor may be an encoder or resolver type sensor.

The wheel hub shaft is rotatably positioned within the hub carrier and is suitably laterally positioned, for its major length, within the rim and tyre combination when mounted. Suitably the rotatably positioning may be by means of two bearings. The bearings will have their own grease compartment and will be sealed such to avoid that grease can leak away and prevent ingress from dirt and dust on the rim side. Examples of suitable bearings arrangements are angular contact ball bearings in O-configuration, tapered roller bearings, internally preloaded bearings or a combination of locating and non-locating bearings.

The inverted portal axle according the invention may be mounted as a rear axle to a vehicle, like a bus, chassis structure using the familiar 4-rod configuration. Alternatively the inverted portal axle may be mounted to the vehicle via a central pivot point in front of the axle and means to locate the axle laterally, at the rear of the axle. Such means to locate the axle laterally may be a sliding joint, a Panhard rod or a Watt linkage. Terms like rear axle, in front and at the rear relate to the driving direction of the vehicle.

### Example

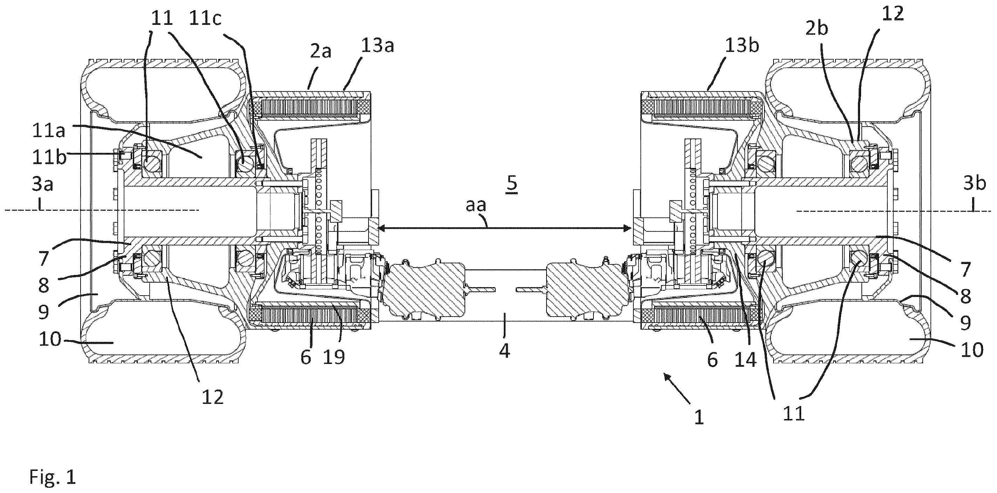

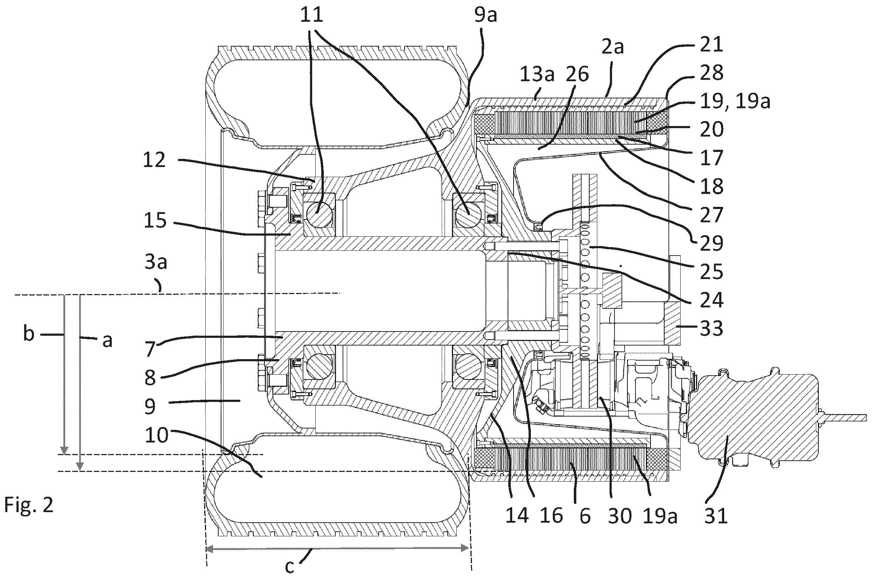

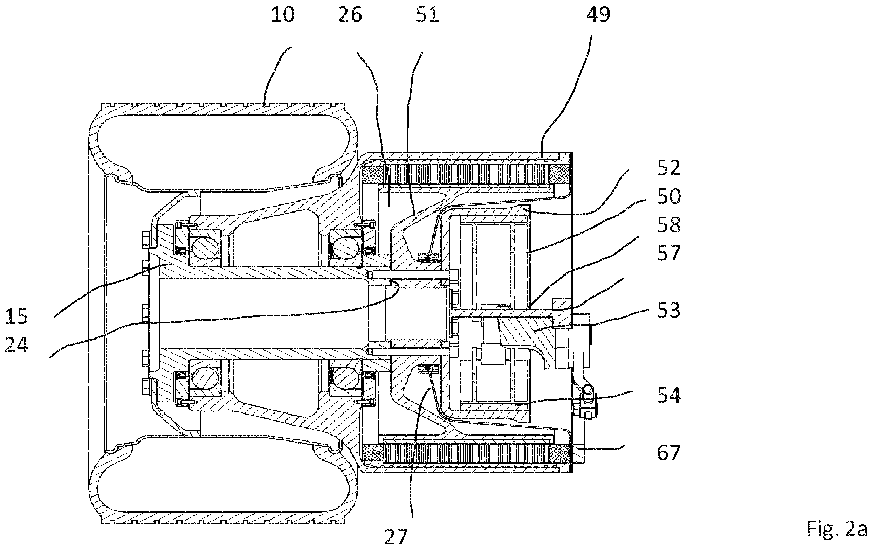

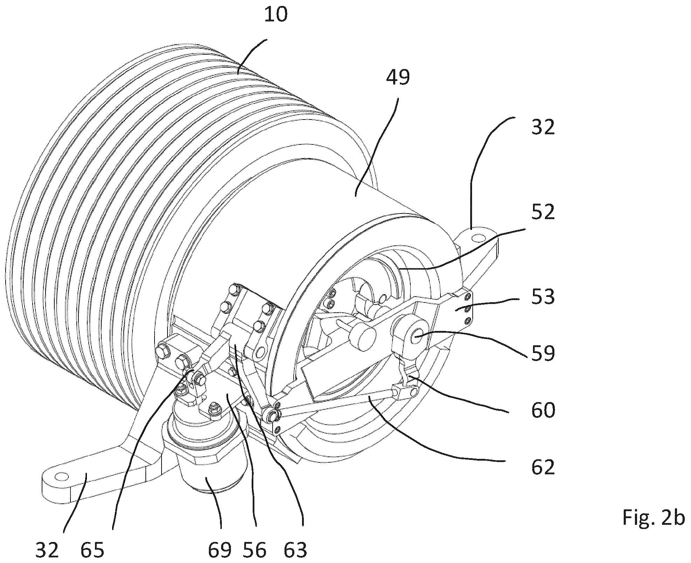

The torque that can be achieved using a hub carrier according to the invention, Design A, as shown in Figure 2 and the torque of a Prior art hub carrier according to Figure 1 of US2019/0023118 are compared in this example. The dimensions for both designs are listed in the below table. The dimensions are close approximations of how a commercial hub carrier would look like when used for a low floor bus for both designs. In the comparison the air gap area is kept the same and thus also the amount of copper and neodymium is about the same for both designs.

| | Design A | Prior art |
|---|---|---|
| Air gap diameter (mm) | 577 | 432 |
| Air gap radius (mm) | 288.5 | 216 |
| Stack length (mm) | 266 | 356 |
| Air gap area (cm2) | 4829 | 4829 |
| Cooling area (cm2) | 5679 | 3520 |

The tangential airgap force will be similar in both designs because of their similar air gap area. In the design of the invention the tangential force works at a larger radius resulting in a torque that is higher by a factor 288.5/216 = 1.335. Further the cooling area is larger for the Design A by a factor 5679/3520 = 1.61. Torque is proportional to current and heat losses are proportional to current square. Thus for a design having a cooling area which is a factor 1.61 larger, it is possible to run a current that is sqrt 1.61 = 1.27 times larger at the same working temperatures as compared to the prior art design. Thus the possible larger torque of Design A according to the invention is calculated by multiplying the geometry factor of 1.335 by the thermal factor of 1.27 resulting in an overall advantage of 1.7 (70% improvement).

The above calculation shows that a direct drive wheel hub according to this invention having the same amount of copper and neodymium can provide 70% more continuous torque than the prior art direct drive design and can be used as part of a rear axle of a low floor bus leaving enough room for the low floor aisle.

The invention shall be illustrated by the following Figures 1-8.

Figure 1 shows a cross-sectional view of an inverted portal axle (1) for use in a low floor bus according to the present invention. Two hub carriers (2a,2b) having a bearing centre axis (3a,3b) are shown. The bearing centre axes (3a,3b) are positioned on a common axis. The two hub carriers(2a,2b) are connected by an axle bridge structure (4) that is radially spaced apart from the common axis of rotation as shown. This creates a space (5) for a low floor when the axle (1) is used in a low floor bus. This space (5) may be expressed by distance (a) between the two hub carriers(2a,2b) which distance (aa) may be between 700 mm and 800 mm. Each hub carrier (2a,2b) comprises a stator (19) of a direct drive electric torque motor (6) and carries a rotary assembly (7) comprising a flange (8) supporting a rim (9) and a super single tyre (10) combination. The rotary assembly (7) is rotatably positioned within the hub carrier (2a,2b) by two angular contact ball bearings in O-configuration (11). Between the bearings (11) a grease compartment (11a) is present and two seals (11b,11c) enclose the space for the grease.

The hub carrier (2a,2b) comprises of a first part (12) which is laterally positioned within the rim (9) and super single tyre (10) combination and a second part (13a,13b) which is laterally positioned next to the rim (9) and tyre (10) combination. The second part (13a) of the hub carrier (2a) is connected to the second part (13b) of the hub carrier (2b) of the other hub carrier (2b) by the axle bridge structure (4).

Figure 2 shows hub carrier (2a) of Figure 1 in more detail. Rotary assembly (7) is comprised of a wheel hub shaft (15) which is laterally positioned within the rim (9) and tyre (10) combination and a second part (14) which is laterally positioned next to the rim (9) and tyre (10) combination.

Second part (14) of the rotary assembly (7) comprises of a steel rotor tube (18) bolted to a rotor flange (16). The steel rotor tube (18) carries permanent magnets (17) of the electric torque motor (6). The permanent magnets (17) of the rotor are positioned at the external side of the steel rotor tube (18).

The second part (13a) of the hub carrier (2a) comprises of a stator (19) of the electric torque motor (6). Tubular stator (19) has a tubular lamination stack (19a). The outer diameter (a) of the tubular lamination stack (19a) is larger than the largest diameter (b) of the rim (9) in Figure 2. Between the tubular stator (19) and the steel rotor tube (18) a tubular shaped air gap (20) is present. Cooling channels (21) are present between the external side of the stator (19) and the load bearing housing of the second part (13a) of the hub carrier (2a).

Rotor flange (16) is connected to a wheel hub shaft (15) which may laterally extend somewhat from within the rim and tyre combination as shown. Wheel hub shaft (15) runs from the flange (8) for its main part within the rim (9) and single tyre (10) combination to an opposite axial end (24). Opposite axial end (24) is axially positioned within the electric torque motor (6). At this axial end (24) the rotor flange (16) and a brake disc (25) is bolted on the wheel hub shaft (15). Alternatively rotor tube (18) and rotor flange (16) may be a single part. The steel rotor tube (18) and the rotor flange (16) rotate within a sealed space (26). Sealed space (26) is enclosed within the hub carrier (2a) by a seal carrier (27). This seal carrier (27) separates sealed space (26) from an outside environment in which the brake disc (25) is present. This seal carrier (27) runs from an axially inner end (28) of the second part (13a) of hub carrier (2a) to a central opening allowing passage of the rotor flange (16). At this opening a seal (29) is present.

The brake disc (25) is provided with a brake calliper (30). The brake calliper (30) is operated by a brake actuator (31). The brake calliper (30) is mounted at the lowest point of the circumference of the second part of the hub carrier (13a) by means of a brake carrier (33).

The tyres (10) as shown in Figures 1 and 2 are in their most compressed condition, both in width and in diameter. The hub carrier as shown is made of one single part. Obviously it may be a bolted assembly of two or more parts. This loaded width (c) is shown in Figure 2. The nominal width will be smaller. As shown the gap between tyre side wall (9a) and the second part (13a,13b) of the hub carrier is just sufficient to avoid contact between the tyre side wall (9a) and the hub carrier (13a) in case of maximum compression of the tyre (9).

Figure 2a shows a hub carrier (49) as in Figure 2 except that the brake disc (25) and brake calliper (30) of Figure 2 are replaced by a drum brake (50). Further the rotor flange (16) and steel rotor tube (18) are combined into a single part (51). The drum brake (50) comprises a brake drum (52) and brake shoes (54). The second part (14) of the rotary assembly carries the brake drum (52) and the brake carrier (53) carries the brake shoes (54). In Figure 2a at axial end (24) the single part rotor (51) and a brake drum (52) are bolted on the wheel hub shaft (15). A drum brake carrier (53) is present comprising of brake shoes (54). As in Figure 2 a seal carrier (27) separates the sealed space (26) from an outside environment in which the drum brake (50) is present. Further a rotational position transducer (57) is shown, that is driven by a short shaft (58), which has a flange to the inside of the brake drum (52). A volume (67) is shown for the connections between motor wires and the windings.

Figure 2b shows the hub carrier (49) of figure 2a in an isometric view from the rear. A drum brake carrier (53) is mounted on the hub carrier (49). A S-camshaft (59) of the drum brake (50) is operated by a S-camshaft lever (60) connected to a pull rod (62). The pull rod (62) is connected to an offset bellcrank (63) which is rotably mounted in two bearing housings. The bellcrank is driven by a pushrod and clevis (65) as part of a standard spring brake actuator (69). The spring brake actuator (69) is mounted to the hub carrier (49) via an actuator mounting bracket (56). The design and the position of brake actuator (69) and the illustrated linkage consisting of the S-camshaft lever (60) and the pull rod (62) for actuating the S-camshaft (59), is such that the width of space (5), available for the aisle, is maximized above wheel axis level. This is partly achieved by having the S-camshaft lever (60) and the pull rod (62) to intrude below the axis level into the free space. Further a suspension arm (32) is shown connected to the hub carrier (49).

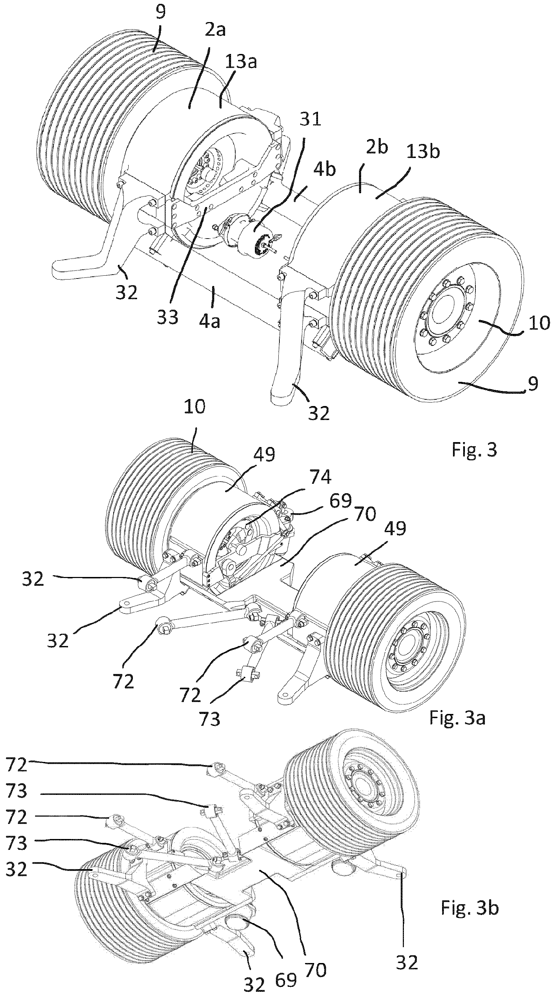

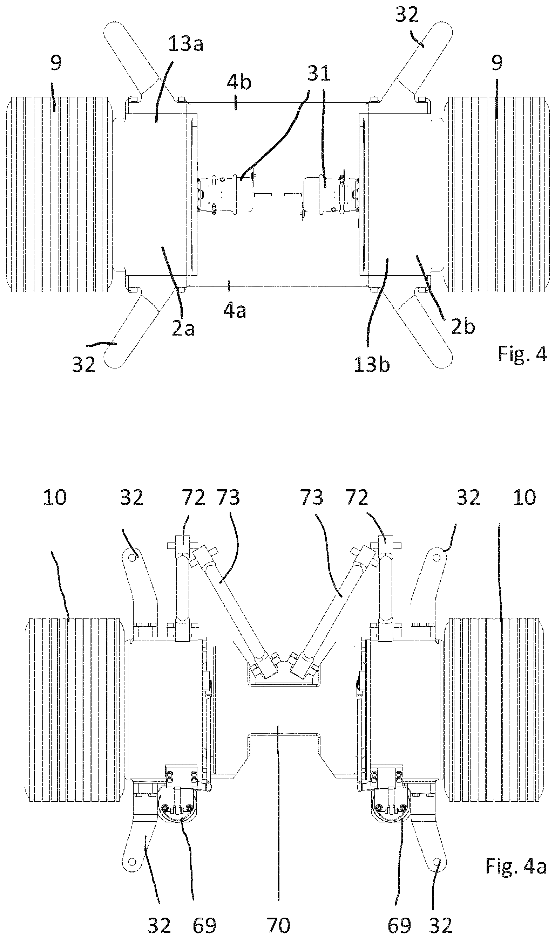

Figure 3 shows the inverted portal axle (1) of Figure 1 in a three-dimensional view and Figure 4 shows the inverted portal axle (1) of Figure 1 from above. It is shown that the axle bridge structure (4) consists of two parallel beams (4a,4b) which leave room for the brake actuator (31). Further a suspension arm (32) is shown connected to the exterior of the second parts (13a,13b) of hub carrier (2a,2b). The second parts (13a,13b) of the hub carrier (2a,2b) is load carrying.

Figure 3a shows the inverted portal axle (1) of Figure 3 with the hub carrier (49) of Figures 2a and 2b in an isometric front view from above. The design of the axle bridge structure (70) allows for using the widely applied 4 -rod linkage. Two lower V-rods (73) and two upper rods (72) are shown. From this angle two brake shoe anchor pins (74) are visible.

Figure 3b shows the inverted portal axle (1) of Figure 3a from below. In this figure it is shown how the axle bridge structure (70) is connected by bolting to the two hub carriers (49). Further it is seen that the suspension arms (32) can be positioned at a greater distance from the axle centerline (in driving direction) compared to the suspension arm in a prior art double tyre configuration, thereby creating space for the spring brake actuator (69) to be mounted to the hub carrier as shown. In this manner the spring brake actuator (69) does not protrude into the space (5).

Figure 4 is the inverted portal axle (1) of Figure 3 as seen from above.

Figure 4a is the inverted portal axle (1) of Figure 3a and 3b as seen from above.

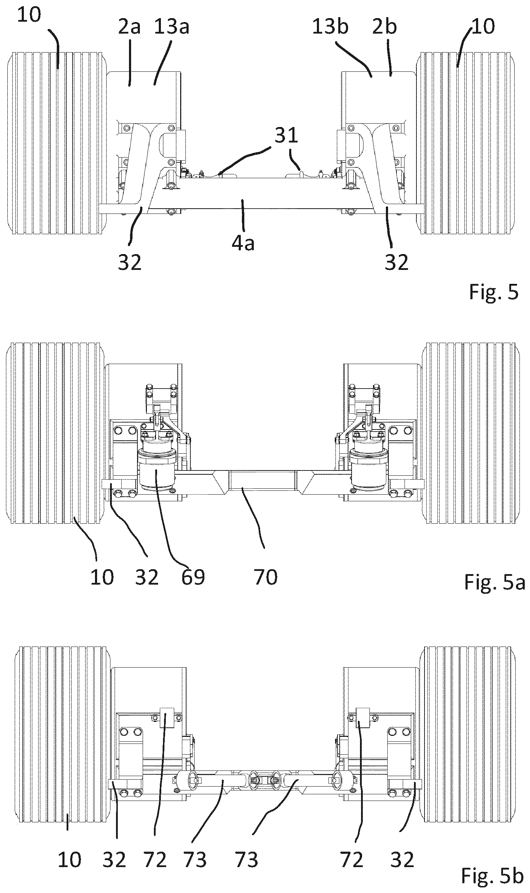

Figure 5 is the inverted portal axle (1) of Figure 1 as seen from behind.

Figure 5a is the inverted portal axle (1) of Figure 3a and 3b as seen from behind.

Figure 5b is the inverted portal axle (1) of Figure 3a and 3b as seen from the front. When comparing the axle of Figure 5 with the axle of Figures 5a and 5b it is clear that the embodiment with the drum brake allows for a lower bus floor which is advantageous.

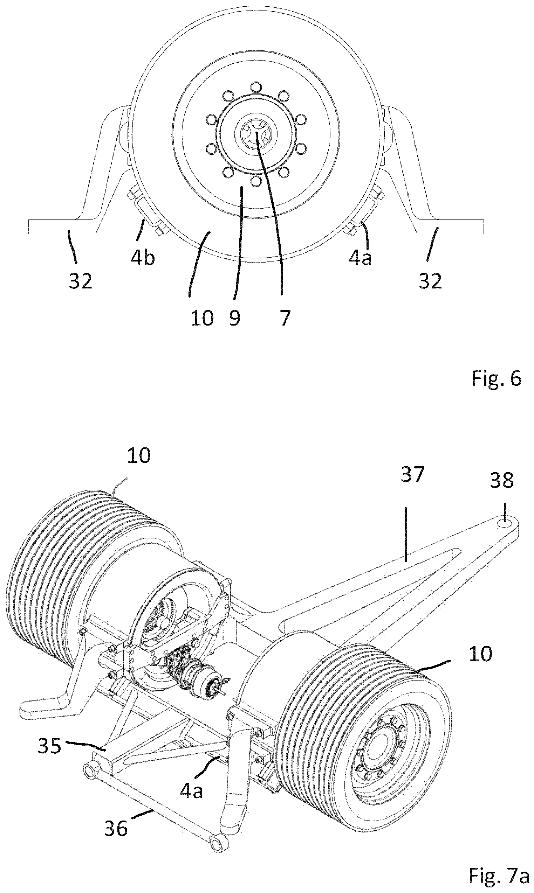

Figure 6 is the inverted portal axle (1) of Figure 1 as seen from aside.

Figure 7a is the portal axle of figure 1 equipped with a structural element (37) that replaces beam (4b) and extends in a forward direction to a central pivot point (38). As a means to locate the axle laterally a Panhard rod (36) is present at the rear of the axle. The Panhard rod (36) is connected to beam (4a) via a Panhard rod axle bracket (35).

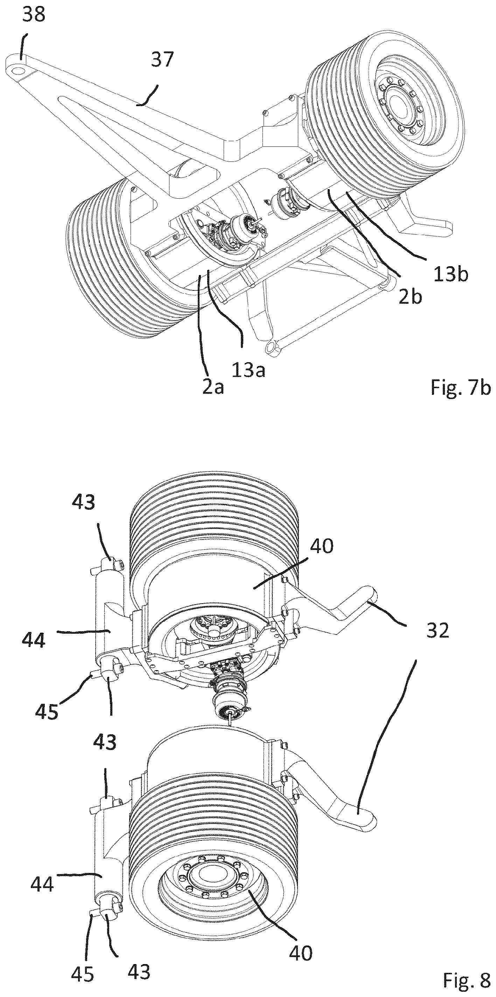

Figure 7b shows the portal axle of Figure 7a from below. This more clearly shows how the structural element (37) is bolted onto the load bearing housing of the second part (13a,13b) of the hub carrier (2a,2b).

Figure 8 shows a hub carrier (40) with independent suspension. No axle bridge structure (4) as in Figures 1-7 is required for this hub carrier (40). For the remaining part all elements of the hub carrier of Figures 1-7 may be present in hub carrier (40). Application of such a hub carrier will provide the same advantages as the afore mentioned high torque in combination with a low floor bus or aisle. Figure 8 shows a suspension support (32), a trailing arm (44),trailing arm pivot shaft (43) and a pivot shaft mounting bolts (45) for mounting to a chassis of a vehicle.

## Claims

1. Inverted portal axle (1) for use in a low floor bus comprising two hub carriers (2a,2b,49) having a bearing centre axis (3a,3b), which bearing centre axes (3a,3b) are positioned on a common axis and wherein the two hub carriers (2a,2b) are connected by an axle bridge structure (4) that is radially spaced apart from the common axis thereby creating a space for a low floor when the axle is used in a low floor bus, wherein each hub carrier (2a,2b) comprises a stator (19) of an electric motor (6) and carries a rotary assembly (7) comprising a flange (8) to support a rim (9) for a tyre (10),
wherein each hub carrier (2a,2b) comprises a first part (12) which is laterally positioned within the rim and tyre combination when mounted and a second part (13a,13b);
wherein the second part (13a) of one hub carrier (2a) is connected to the second part (13b) of the other hub carrier (2b) by the axle bridge structure;
wherein the rotary assembly (7) comprises a wheel hub shaft (15) and a second part (14);
wherein the second part (13a,13b) of the hub carrier (2a,2b) comprises the stator (19) of the electric motor (6) and the second part (14) of the rotary assembly comprises a rotor (18) of the electric motor,
**characterised in that**
the electric motor (6) is a direct drive electric motor (6), the tyre (10) is a single tyre (10), the second part (13a,13b) of the hub carrier (2a,2b) is laterally positioned next to the rim and tyre combination when mounted and the second part (14) of the rotary assembly (7) is laterally positioned next to the rim and tyre combination when mounted.

2. Axle according to claim 1, wherein the flange (8) of the rotary assembly (7) supports a rim (9) and a single tyre (10).

3. Axle according to claim 2, wherein the tyre is a super single tyre (10) and wherein the tyre (10) has a nominal width of less than 500 mm.

4. Axle according to any one of claims 1-3, wherein the stator (19) comprises a lamination stack (19a) having a tubular shape as positioned at the inner side of a load bearing housing of the second part (13a,13b) of the hub carrier (2a,2b,49) and wherein the outer diameter (a) of the lamination stack (19a) is more than 90% of the largest diameter (b) of the rim (9).

5. Axle according to any one of claims 1-4, wherein the stator (19) comprises a lamination stack (19a) having a tubular shape as positioned at the inner side of a load bearing housing of the second part (13a,13b) of the hub carrier (2a,2b,49) and wherein cooling channels (21) are present between the lamination stack and the inner side of the load bearing housing.

6. Axle according to any one of claims 1-5, wherein the stator (19) is of the concentrated winding type.

7. Axle according to any one of claims 1-6, wherein the direct drive electric motor is a direct drive electric torque motor and wherein the rotor (18) comprises permanent magnets (17).

8. Axle according to claim 7, wherein the direct drive electric motor is a high rotor pole switched reluctance machine and wherein the rotor (18) comprises a plurality of rotor poles.

9. Axle according to any one of claims 1-8, wherein the rotary assembly (7) is rotatably positioned within the hub carrier (2a,2b,49) by means of two bearings (11) and wherein between the axially spaced apart bearings (11) a common grease compartment (11a) is present and wherein the two bearings (11) and the grease compartment(11a) is sealed by seals (11b, 11c).

10. Axle according to any one of claims 1-9, wherein the second part (14) of the rotary assembly carries a brake disc (25) further provided with a brake calliper (30) as mounted at or close to the lowest point of the circumference of the hub carrier (2a,2b).

11. Axle according to any one of claims 1-9, wherein the axle comprises a drum brake (50) comprising a brake drum (52) and brake shoes (54) wherein the second part (14) of the rotary assembly carries the brake drum (52) and wherein the brake shoes (54) are carried by a brake carrier (53).

12. Vehicle having an axle according to any one of claims 1-11 mounted to a vehicle chassis structure.

13. Vehicle according to claim 12, wherein the axle is mounted to the vehicle chassis structure via a central pivot point (38) in front of the axle and via means (36) to locate the axle laterally at the rear of the axle and wherein the means to locate the axle laterally at the rear of the axle are one of a sliding joint, a Panhard rod (36) or a Watt linkage.

14. Vehicle according to any one of claims 12-13, wherein the electric motor is adapted for regenerative braking, the axle comprises a drum brake (50) and the vehicle is further provided with one or more bleed resistors.

15. A hub carrier (2a,2b) comprising an electric motor (6) and a rotary assembly (7) comprising a flange (8) to support a rim for a tyre,
wherein the hub carrier (2a,2b) comprises a first part (12) which is laterally positioned within the rim and tyre combination when mounted and a second part (13a,13b);
wherein the rotary assembly (7) comprises a wheel hub shaft (15) which is laterally positioned within the rim and tyre combination when mounted and a second part (14); and
wherein the second part (13a,13b) of the hub carrier (2a,2b) comprises a stator (19) of the electric torque motor (6) and the second part (14) of the rotary assembly (7) carries a rotor (18) of the electric motor (6),
wherein the electric motor (6) is a direct drive electric motor (6), the tyre (10) is a single tyre (10), the second part (13a,13b) of the hub carrier (2a,2b) is laterally positioned next to the rim and tyre combination when mounted and the second part (14) of the rotary assembly (7) is laterally positioned next to the rim and tyre combination when mounted.

16. A vehicle chassis structure including a hub carrier according to claim 15 connected to it.

## Patentansprüche

1. Umgekehrte Portalachse (1) zur Verwendung in einem Niederflurbus, umfassend zwei Radträger (2a,2b,49), die eine Lagermittelachse (3a,3b) aufweisen, wobei die Lagermittelachsen (3a,3b) auf einer gemeinsamen Achse positioniert sind und wobei die zwei Radträger (2a,2b) durch eine Achsbrückenstruktur (4) verbunden sind, die radial von der gemeinsamen Achse beabstandet ist, wodurch Raum für einen Niederflur geschaffen wird, wenn die Achse in einem Niederflurbus verwendet wird, wobei jeder Radträger (2a,2b) einen Stator (19) eines Elektromotors (6) umfasst und eine Drehanordnung (7) trägt, umfassend einen Flansch (8), um eine Felge (9) für einen Reifen (10) zu stützen, wobei jeder Radträger (2a,2b) einen ersten Teil (12), der, wenn montiert, seitlich innerhalb der Felgen- und Reifenkombination positioniert ist, und einen zweiten Teil (13a, 13b) umfasst;
wobei der zweite Teil (13a) eines Radträgers (2a) durch die Achsbrückenstruktur mit dem zweiten Teil (13b) des anderen Radträgers (2b) verbunden ist;
wobei die Drehanordnung (7) eine Radnabenwelle (15) und einen zweiten Teil (14) umfasst;
wobei der zweite Teil (13a, 13b) des Radträgers (2a,2b) den Stator (19) des Elektromotors (6) umfasst und der zweite Teil (14) der Drehanordnung einen Rotor (18) des Elektromotors umfasst,
**dadurch gekennzeichnet, dass**
der Elektromotor (6) ein Direktantriebselektromotor (6) ist, der Reifen (10) ein Einzelreifen (10) ist, der zweite Teil (13a, 13b) des Radträgers (2a,2b), wenn montiert, seitlich neben der Felgen- und Reifenkombination positioniert ist und der zweite Teil (14) der Drehanordnung (7), wenn montiert, seitlich neben der Felgen- und Reifenkombination positioniert ist.

2. Achse nach Anspruch 1, wobei der Flansch (8) der Drehanordnung (7) eine Felge (9) und einen Einzelreifen (10) stützt.

3. Achse nach Anspruch 2, wobei der Reifen ein Super-Einzelreifen (10) ist und wobei der Reifen (10) eine Nennbreite von weniger als 500 mm aufweist.

4. Achse nach einem der Ansprüche 1 bis 3, wobei der Stator (19) einen Blechstapel (19a) umfasst, der eine röhrenförmigen Gestalt aufweist, der an der Innenseite eines lasttragenden Gehäuses des zweiten Teils (13a, 13b) des Radträgers (2a,2b,49) positioniert ist, und wobei der Außendurchmesser (a) des Blechstapels (19a) mehr als 90 % des größten Durchmessers (b) der Felge (9) beträgt.

5. Achse nach einem der Ansprüche 1 bis 4, wobei der Stator (19) einen Blechstapel (19a) umfasst, der eine röhrenförmigen Gestalt aufweist, der an der Innenseite eines lasttragenden Gehäuses des zweiten Teils (13a, 13b) des Radträgers (2a,2b,49) positioniert ist, und wobei Kühlkanäle (21) zwischen dem Blechstapel und der Innenseite des lasttragenden Gehäuses vorhanden sind.

6. Achse nach einem der Ansprüche 1 bis 5, wobei der Stator (19) von einem Typ mit konzentrierter Wicklung ist.

7. Achse nach einem der Ansprüche 1 bis 6, wobei der Direktantriebselektromotor ein Direktantriebselektrodrehmomentmotor ist und wobei der Rotor (18) Permanentmagnete (17) umfasst.

8. Achse nach Anspruch 7, wobei der Direktantriebselektromotor eine geschaltete Reluktanzmaschine mit vielen Rotorpolen ist und wobei der Rotor (18) eine Vielzahl von Rotorpolen umfasst.

9. Achse nach einem der Ansprüche 1 bis 8, wobei die Drehanordnung (7) mittels zweier Lager (11) drehbar innerhalb des Radträgers (2a,2b,49) positioniert ist, und wobei zwischen den axial beabstandeten Lagern (11) ein gemeinsamer Schmierraum (11a) vorhanden ist, und wobei die zwei Lager (11) und der Schmierraum (11a) durch Dichtungen (11b,11c) abgedichtet sind.

10. Achse nach einem der Ansprüche 1 bis 9, wobei der zweite Teil (14) der Drehanordnung eine Bremsscheibe (25) trägt, die ferner mit einem Bremssattel (30) versehen ist, der an oder nahe dem tiefsten Punkt des Umfangs des Radträgers (2a,2b) montiert ist.

11. Achse nach einem der Ansprüche 1 bis 9, wobei die Achse eine Trommelbremse (50) umfasst, umfassend eine Bremstrommel (52) und Bremsbacken (54), wobei der zweite Teil (14) der Drehanordnung die Bremstrommel (52) trägt und wobei die Bremsbacken (54) durch einen Bremsträger (53) getragen werden.

12. Fahrzeug, das eine Achse nach einem der Ansprüche 1 bis 11 aufweist, die an einer Fahrzeugkarosseriestruktur montiert ist.

13. Fahrzeug nach Anspruch 12, wobei die Achse an der Fahrzeugkarosseriestruktur über einen zentralen Drehpunkt (38) vor der Achse und über Mittel (36) montiert ist, um die Achse an der Rückseite der Achse seitlich zu lokalisieren, und wobei die Mittel, um die Achse an der Rückseite der Achse seitlich zu lokalisieren, eines von einem Gleitgelenk, einem Panhardstab (36) oder einem Wattgestänge sind.

14. Fahrzeug nach einem der Ansprüche 12 bis 13, wobei der Elektromotor für ein regeneratives Bremsen angepasst ist, die Achse eine Trommelbremse (50) umfasst und das Fahrzeug ferner mit einem oder mehreren Entladewiderständen ausgestattet ist.

15. Radträger (2a, 2b), umfassend einen Elektromotor (6) und eine Drehanordnung (7), umfassend einen Flansch (8), um eine Felge für einen Reifen zu stützen,
wobei jeder Radträger (2a,2b) einen ersten Teil (12), der, wenn montiert, seitlich innerhalb der Felgen- und Reifenkombination positioniert ist, und einen zweiten Teil (13a, 13b) umfasst;
wobei die Drehanordnung (7) eine Radnabenwelle (15), die, wenn montiert, seitlich innerhalb der Felgen- und Reifenkombination positioniert ist, und einen zweiten Teil (14) umfasst; und
wobei der zweite Teil (13a, 13b) des Radträgers (2a,2b) einen Stator (19) des Elektrodrehmomentmotors (6) umfasst und der zweite Teil (14) der Drehanordnung (7) einen Rotor (18) des Elektromotors (6) trägt,
wobei der Elektromotor (6) ein Direktantriebselektromotor (6) ist, der Reifen (10) ein Einzelreifen (10) ist, der zweite Teil (13a, 13b) des Radträgers (2a,2b), wenn montiert, seitlich neben der Felgen- und Reifenkombination positioniert ist und der zweite Teil (14) der Drehanordnung (7), wenn montiert, seitlich neben der Felgen- und Reifenkombination positioniert ist.

16. Fahrzeugkarosseriestruktur, die einen Radträger nach Anspruch 15 einschließt, der damit verbunden ist.

## Revendications

1. Essieu portique inversé (1) destiné à être utilisé dans un bus à plancher bas comprenant deux porte-moyeux (2a, 2b, 49) ayant un axe central de palier (3a, 3b), lesquels axes centraux de palier (3a, 3b) sont positionnés sur un axe commun et dans lequel les deux porte-moyeux (2a, 2b) sont reliés par une structure de pont d'essieu (4) qui est radialement espacée de l'axe commun créant de ce fait un espace pour un plancher bas lorsque l'essieu est utilisé dans un bus à plancher bas, dans lequel chaque porte-moyeu (2a, 2b) comprend un stator (19) d'un moteur électrique (6) et porte un ensemble rotatif (7) comprenant une bride (8) pour supporter une jante (9) pour un pneu (10), dans lequel chaque porte-moyeu (2a, 2b) comprend une première partie (12) qui est positionnée latéralement dans la combinaison jante et pneu lorsqu'elle est montée, et une seconde partie (13a, 13b) ;
dans lequel la seconde partie (13a) d'un porte-moyeu (2a) est reliée à la seconde partie (13b) de l'autre porte-moyeu (2b) par la structure de pont d'essieu ;
dans lequel l'ensemble rotatif (7) comprend un arbre de moyeu de roue (15) et une seconde partie (14) ;
dans lequel la seconde partie (13a, 13b) du porte-moyeu (2a, 2b) comprend le stator (19) du moteur électrique (6) et la seconde partie (14) de l'ensemble rotatif comprend un rotor (18) du moteur électrique,
**caractérisé en ce que**
le moteur électrique (6) est un moteur électrique à entraînement direct (6), le pneu (10) est un pneu simple (10), la seconde partie (13a, 13b) du porte-moyeu (2a, 2b) est positionnée latéralement à côté de la combinaison jante et pneu lorsqu'elle est montée et la seconde partie (14) de l'ensemble rotatif (7) est positionnée latéralement à côté de la combinaison jante et pneu lorsqu'elle est montée.

2. Essieu selon la revendication 1, dans lequel la bride (8) de l'ensemble rotatif (7) supporte une jante (9) et un pneu simple (10).

3. Essieu selon la revendication 2, dans lequel le pneu est un pneu super simple (10) et dans lequel le pneu (10) a une largeur nominale inférieure à 500 mm.

4. Essieu selon l'une quelconque des revendications 1 à 3, dans lequel le stator (19) comprend un empilement stratifié (19a) ayant une forme tubulaire tel que positionné sur le côté intérieur d'un logement de palier de charge de la seconde partie (13a, 13b) du porte-moyeu (2a, 2b, 49) et dans lequel le diamètre externe (a) de l'empilement stratifié (19a) est supérieur à 90 % du plus grand diamètre (b) de la jante (9).

5. Essieu selon l'une quelconque des revendications 1 à 4, dans lequel le stator (19) comprend un empilement stratifié (19a) ayant une forme tubulaire tel que positionné sur le côté intérieur d'un logement de palier de charge de la seconde partie (13a, 13b) du porte-moyeu (2a, 2b, 49) et dans lequel des canaux de refroidissement (21) sont présents entre l'empilement stratifié et le côté intérieur du logement de palier de charge.

6. Essieu selon l'une quelconque des revendications 1 à 5, dans lequel le stator (19) est du type à enroulement concentré.

7. Essieu selon l'une quelconque des revendications 1 à 6, dans lequel le moteur électrique à entraînement direct est un moteur électrique à couple à entraînement direct et dans lequel le rotor (18) comprend des aimants permanents (17).

8. Essieu selon la revendication 7, dans lequel le moteur électrique à entraînement direct est une machine à réluctance commutée à pôles de rotor élevés et dans lequel le rotor (18) comprend une pluralité de pôles de rotor.

9. Essieu selon l'une quelconque des revendications 1 à 8, dans lequel l'ensemble rotatif (7) est positionné de manière rotative dans le porte-moyeu (2a, 2b, 49) au moyen de deux paliers (11) et dans lequel entre les paliers axialement espacés (11) un compartiment de graisse commun (11a) est présent et dans lequel les deux paliers (11) et le compartiment de graisse (11a) sont scellés par des joints (11b, 11c).

10. Essieu selon l'une quelconque des revendications 1 à 9, dans lequel la seconde partie (14) de l'ensemble rotatif porte un disque de frein (25) muni en outre d'un étrier de frein (30) tel qu'il est monté au niveau de ou proche du point le plus bas de la circonférence du porte-moyeu (2a, 2b).

11. Essieu selon l'une quelconque des revendications 1 à 9, dans lequel l'essieu comprend un frein à tambour (50) comprenant un tambour de frein (52) et des mâchoires de frein (54), dans lequel la seconde partie (14) de l'ensemble rotatif porte le tambour de frein (52) et dans lequel les mâchoires de frein (54) sont portées par un porte-frein (53).

12. Véhicule comportant un essieu selon l'une quelconque des revendications 1 à 11 monté sur une structure de châssis de véhicule.

13. Véhicule selon la revendication 12, dans lequel l'essieu est monté sur la structure du châssis du véhicule par le biais d'un point de pivot central (38) en face de l'essieu et par le biais de moyens (36) pour localiser l'essieu latéralement à l'arrière de l'essieu et dans lequel les moyens pour localiser l'essieu latéralement à l'arrière de l'essieu sont l'un des joints coulissants, une tige Panhard (36) ou une tringlerie Watt.

14. Véhicule selon l'une quelconque des revendications 12 à 13, dans lequel le moteur électrique est adapté au freinage par récupération, l'essieu comprend un frein à tambour (50) et le véhicule est en outre muni d'une ou plusieurs résistances de purge.

15. Porte-moyeu (2a, 2b) comprenant un moteur électrique (6) et un ensemble rotatif (7) comprenant une bride (8) pour supporter une jante pour un pneu,
dans lequel le porte-moyeu (2a, 2b) comprend une première partie (12) qui est positionnée latéralement dans la combinaison jante et pneu lorsqu'elle est montée, et une seconde partie (13a, 13b) ;
dans lequel l'ensemble rotatif (7) comprend un arbre de moyeu de roue (15) qui est positionné latéralement à l'intérieur de la combinaison jante et pneu lorsqu'elle est montée, et une seconde partie (14) ; et
dans lequel la seconde partie (13a, 13b) du porte-moyeu (2a, 2b) comprend un stator (19) du moteur électrique à couple (6) et la seconde partie (14) de l'ensemble rotatif (7) porte un rotor (18) du moteur électrique (6),
dans lequel le moteur électrique (6) est un moteur électrique à entraînement direct (6), le pneu (10) est un pneu simple (10), la seconde partie (13a, 13b) du porte-moyeu (2a, 2b) est positionnée latéralement à côté de la combinaison jante et pneu lorsqu'elle est montée et la seconde partie (14) de l'ensemble rotatif (7) est positionnée latéralement à côté de la combinaison jante et pneu lorsqu'elle est montée.

16. Structure de châssis de véhicule comportant un porte-moyeu selon la revendication 15 qui est relié à celle-ci.
